**Europäisches Patentamt**

(19) **European Patent Office**

**Office européen des brevets**

(11) Publication number : **0 353 802 B1**

# (12) EUROPEAN PATENT SPECIFICATION

(45) Date of publication of patent specification :
10.03.93 Bulletin 93/10

(51) Int. Cl.⁵ : **C08C 1/14**

(21) Application number : **89201812.8**

(22) Date of filing : **06.07.89**

(54) **Process for the recovery of rubber crumbs prepared by emulsion polymerization.**

(30) Priority : **11.07.88 GB 8816438**

(43) Date of publication of application :
**07.02.90 Bulletin 90/06**

(45) Publication of the grant of the patent :
**10.03.93 Bulletin 93/10**

(84) Designated Contracting States :
**BE DE ES FR GB IT NL**

(56) References cited :
**EP-A- 0 035 661**
**US-A- 4 148 991**

(73) Proprietor : **SHELL INTERNATIONALE
RESEARCH MAATSCHAPPIJ B.V.
Carel van Bylandtlaan 30
NL-2596 HR Den Haag (NL)**

(72) Inventor : **Peters, Joseph Peter Marie
Shell Chimie 23 Avenue de la République
Rueil-Malmaisom Départ.Hauts de Seine (FR)**
Inventor : **Van Os, George
Vondelingenweg 601
NL-3196 KK Rotterdam (NL)**
Inventor : **De Vries, Sytske Minnie
Vondelingenweg 601
NL-3196 KK Rotterdam (NL)**

EP 0 353 802 B1

## Description

The invention relates to a process for recovery of rubber crumbs prepared by emulsion polymerization. More particularly the invention is relating to a process for recovery of rubber crumbs from emulsion polymerization fluids, containing non converted monomer of which the rubber copolymerisate to be recovered, has been prepared, by copolymerization of a conjugated diene such as 1,3-butadiene, 2,3-dimethyl-1,3-butadiene, 2-phenyl-1,3-butadiene, 2-methoxy-1,3-butadiene, isoprene, neoprene, piperylene and more preferably 1,3-butadiene and vinyl substituted aromatics and more preferably styrene, and/or acrylonitrile.

The conventional processes for such a recovery comprise flashing the latex in order to remove the non converted conjugated diene, stripping to remove non converted vinyl substituted aromatic and/or acrylonitrile, optionally blending with additives, e.g. extender oils, coagulation either in a series of vessels and/or by mechanical means, dewatering and final drying in a hot air drier or mechanical drier. An embodiment of such a conventional process has been depicted e.g. in Stanford Research Institute report No. 64, Styrene-Butadiene Elastomers (1970), p. 71.

Major disadvantages encountered in these processes are a rather complex monomer recovery unit (removal of e.g. styrene at high energy cost and high clean out cost); in case hot air driers are used: the presence of small amounts of residual monomer in the large drier exhaust stream, which have to be eliminated virtually completely due to environmental restrictions (at high cost), contamination of grades and fire hazards and when coagulation is performed in vessels: a non optimal product quality and quality consistency due to e.g. fouling of vessels.

Various potential modifications of such a process type have been proposed, however, without actual circumvention of the before mentioned disadvantages, although there is a strong increasing demand for rubber materials having a more consistent quality, and produced by a process which is less labour intensive and is in accordance with environmental standards.

Therefore it is an object of the present invention to provide an improved process, which leads to a consistently high quality product, which incurs lower costs and particularly labour costs and meets the modern environmental requirements.

Surprisingly such a process aimed at could be found, which is characterized in that it only comprises a flashing step, in order to remove the non converted conjugated diene monomer, an optional step of blending with additives, a coagulation step carried out in closed equipment, closed mechanical dewatering step(s) which may optionally be integrated with the coagulation step, and a direct continuous or batchwise step of removal of water and the non converted vinyl substituted aromatic and/or acrylonitrile monomer by evaporation, and subsequent separation of the monomer from water after condensation.

The flashing step of the process of the present invention is preferably carried out as a continuous process for removal of unreacted conjugated diene monomer from the latex, as obtained by an emulsion polymerization step, in a series of flash vessels. Blending is carried out in mixing tanks, wherein e.g. extender oils and antioxidants are added to the monomer containing fluid.

The coagulation step is preferably carried out as a continuous mechanical coagulation process using a staged apparatus having self cleaning means such as a twin screw extruder coagulator (instead of the conventionally applied series of vessels, wherein the latex was coagulated by addition of relatively large amounts of salts and acid), by addition of water, low pressure steam and a strong acid e.g. sulphuric acid, in an amount to provide a sufficiently low pH in order to obtain a substantially complete coagulation, and more preferably a pH value below 3, to said extruder at a temperature in the range of from 50-100 °C and preferably in the range of from 60-80 °C.

More preferably a twin screw extruder is used of the type, marketed by Battenfeld Extrusionstechnik, at Bad Oeynhausen, Federal Republic of Germany, as disclosed in Battenfeld Lieferprogrammdokumentation, May 1982. Such extruder may preferably be used in combination with a disintegrator for performing a post coagulation and disintegration of rubber particles which are too large.

As suitable dewatering equipment for the initial separation of the coagulate from a major part of the aqueous solution, a mechanical filter and/or mechanical predrier may be used.

By the term "closed equipment" as used throughout this specification, it is meant to indicate that during the coagulation, and dewatering step no volatile components and particularly non-converted monomer may be exhausted.

Preferably rubber crumbs are prepared in this step of the process of the present invention, which have a water content in the range of from 1 to 15% by weight.

More particularly for SBR the coagulation step is carried out, starting from a latex having a dry matter content of from 15 to 30% by weight, a styrene content of from 0.5 to 35% by weight and preferably from 5 to 35% by weight. According to a more preferred embodiment, the starting latex has a pH value in the range of from 9.0 to 11.0 and more preferably from 9.5 to 10.5; and sulphuric acid (98%) in an amount of from 2.5 to 5 kg per m³ latex and water in amount of from 0.1 to 0.5 m³/m³ latex are used, whereas low pressure steam in an amount sufficient to maintain a temperature of about 60 °C and electrical energy of from 1 to 10 kWh/m³ latex, are applied.

The process step for the separation of the remaining amounts of water and the non converted vinyl substituted aromatic monomer and more particularly styrene and/or acrylonitrile, is preferably carried out in a combined evaporating/drying equipment of staged, indirectly heated, mechanically agitated self cleaning type. More preferably this equipment is operated under vacuum.

It will be appreciated that during the drying/evaporation step no volatile components and more particularly non-converted monomer may be exhausted.

According to a possible embodiment of this process step of the present invention, the product obtained by the preceding coagulation/disintegration step, is e.g. conveyed into an evaporating/drying equipment of the type as disclosed in "Information Sheets MKT-machines for direct evaporation of solvents in synthetic rubber process", April 1983, page 1-6, Dipl.Ing. H. List, Ind. Verfahrenstechnik, 4133 Pratteln/Schweiz, Information sheet "MKT-machines, processes and products", Dipl.Ing. H. List Ind. Verfahrenstechnik, 4133 and Chem-Ing.-Tech. 56 (1984) No. 11, A585-A603.

In such equipment the final evaporation takes place at vacuum and at a temperature of at most 100 °C and more particularly in the range of from 75° to 100 °C.

The volatiles vaporized in the evaporator/dryer are recovered by condensation and phase separation and the monomer is returned to stock tanks, from which it is fed back to the emulsion polymerization process. This evaporating/drying step may be e.g. carried out in an evaporator/dryer as mentioned hereinbefore having a sufficient heat exchange surface to provide the required heat of evaporation and providing sufficient residence time to reduce the volatile content of the crumbs to the required level.

It will be appreciated that according to an alternative embodiment of the presently proposed process, the coagulation step, and the drying/evaporation step to remove the last part of the water and non converted monomer, may be carried out in equipment of the type as disclosed in e.g. "Direct Extrusion of Polymer Latex Emulsions, R.J. Nichols, R.K. Senn and F. Kheradi, Welding Engineers Inc., King of Prussia, for U.S.A., Advances in Polymer Chemistry, Vol 3, No. 1, 1983 and U.S. patents 3,742,093; 3,993,292; 4,110,843 and 4,148,991.

It can only be regarded as very surprising that by a suitable choice of the line-up and of equipment used it is possible to omit the styrene stripper; moreover that rubber can be successfully dried - and in this process demonomerized - in a vacuum drier of the type mentioned, without equipment fouling, while maintaining product properties.

Moreover a person skilled in the art charged with the development of an economical, industrial recovery process for this type of rubber, could on the one hand make a selection from a great variety of industrial drying equipment of which was known that it was suitable for polymer processing, as may be derived e.g. from Chem.-Ing.-Tech. 56 (1984), No. 11, A587, A589, A593, A595, A596, A599. On the other hand the same skilled person had obvious reasons to assume that the presently proposed drying equipment could not be efficiently used for drying of the beforementioned elastomer, as may be derived from e.g. Stanford Research Institute, Report No. 64, Styrene-Butadiene Elastomers (1970), p 55, suggesting that only styrene-butadiene copolymers with high styrene contents and destined to be used as resins rather than elastomers can be conveniently processed.

It will be appreciated that the process according to the present invention will lead to significantly reduced operating costs and equipment costs, which are reached by significantly reduced energy consumption, and much simpler processing lines, resulting in saving in labour costs.

Moreover the process of the present invention avoids the waste of any significant amounts of vinyl substituted aromatic monomer and/or acrylonitrile in the environment by means of the waste air stream, whereas fire hazards are avoided too.

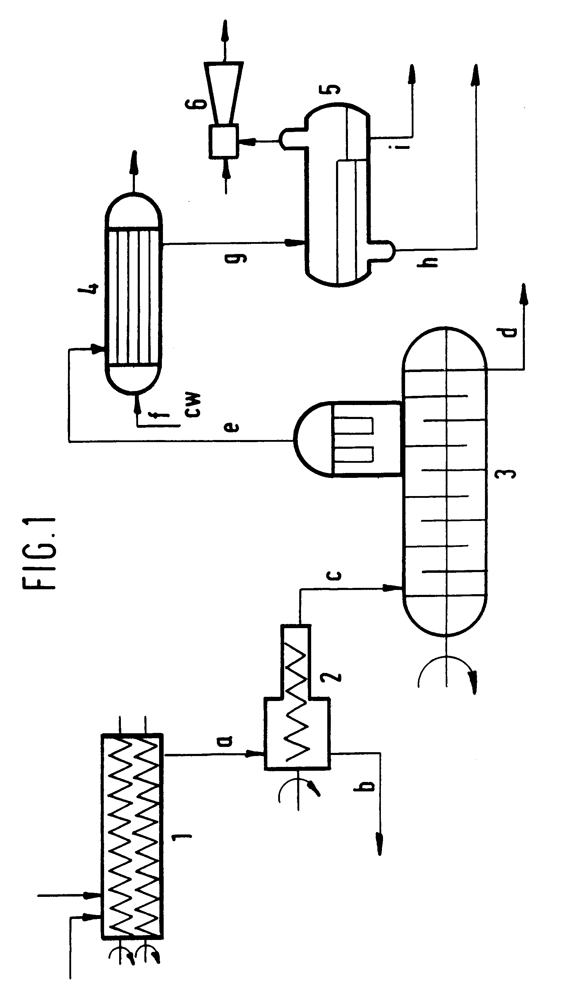

The invention will be further described with reference to the relevant part of a specific embodiment depicted in fig. 1.

According to this embodiment a latex, obtained by emulsion polymerization of butadiene, styrene and/or acrylonitril, from which the nonconverted butadiene has been removed, and water, acid and steam are added to the mechanical coagulator 1, from which the aqueous suspension of rubber particles is fed to a dewatering expeller 2, via line a from which a separated water stream is wasted through line b, while the obtained moist rubber crumb mass is transferred via line c to a vacuum dryer/evaporator 3 from which the dry rubber crumbs are discharged via line d, while the exaust gas is led via line e to a condensor/heat exchanger 4, wherein cooling water is fed via line f.

The styrene and/or acrylonitrile monomer-water mixture is fed via line g to a separator 5 from which separated streams of styrene and/or acrylonitrile and water are led via lines h and i, while the separator 5 is directly connected with a vacuum ejector 6.

It will be appreciated from this description that the used processing line-up will be much simpler in comparison with the before mentioned part of the conventional process line.

The present invention is further illustrated by the following example and comparative examples:

A series of experiments was carried out to investigate mechanical coagulation (in closed equipment) combined with vacuum drying using a commercially available latex obtained by a cold emulsion polymerization process and from which non converted butadiene monomer had been removed by flashing (SBR-1712) wherein styrene was still present in the original concentration in starting latex samples.

The following experiments were carried out:

1. mechanical coagulation of stripped latex with 10% solids in mother liquor, followed by normal drying with hot air

2. mechanical coagulation of non-stripped latex followed by vacuum drying.

The relevant data of the experiments carried out have been summarized in table 1.

For all the rubbers produced a complete chemical and physical analysis has been made.

The mechanical coagulation was performed in a semi continuous procedure in a closed vessel using a standard reactor with baffles and radial turbine stirrer.

The coagulation temperature was 50 °C and the pH was varied between 1.5 and 4. The coagulation vessel was partly filled with water (pH 1.5-4) and the latex was gradually added to the vessel until the required solids content was reached. Latex which had not been stripped prior to mechanical coagulation to remove non converted styrene monomer and which was containing a few % of styrene, was used as feed to the mechanical coagulation.

Vacuum drying experiments were performed in a rotating evaporator. A round flask was filled to about 20% with wet rubber crumbs and rotated at such a speed that the rubber crumbs were mixed thoroughly without being pressed to the glass wall. The flask was heated in a hot water bath of 100 °C. The applied vacuum was 4.7-6.7 kPa (35-50 mm Hg).

The water and styrene evaporating from the wet rubber were condensed in a cold trap (isopropyl alcohol/carbon dioxide). The amounts of water and styrene which evaporated as a function of time were determined and rubber was dried until the required volatiles content (< 0.5% by weight) was reached.

An industrially manufactured latex (SBR-1712 latex) with a solids content of 24.6% was blended with oil. The oil extended latex was then continuously added to the coagulation vessel containing approximately 10 l of water (pH 4). The coagulation was carried out at a temperature of 50 °C and the pH was maintained at 4 by addition of diluted sulphuric acid. No problems were encountered in the coagulation: no serious fouling occurred and rubber crumbs of a reasonable size were formed; no big lumps of rubber were formed.

After coagulation the rubber crumbs were removed from the mother liquor and excess water was removed by putting the rubber on a screen. Finally the rubber was dried in an oven at 95 °C with excess air.

Oil extended latex, containing approximately 4% of styrene (not converted in polymerization) was mechanically coagulated at pH = 2 and a temperature of 50 °C. After coagulation and dewatering on a screen the rubber was dried under vacuum as hereinbefore described, at 4.7 kPa (35 mm Hg). The drying time required to obtain a volatiles content of less than 0.1% was 3.5 hours.

The drying time for the reference sample was also 3.5 hours. The styrene content of the reference wet rubber was 2500 ppm, which was reduced to 420 ppm after drying.

It will be appreciated that on account of the obtained experimental data, latex from which the non-converted styrene has not been removed (resulting in a styrene content of some 4%) can be mechanically coagulated without problems and that rubber which has been mechanically coagulated from latex containing some 4% of styrene monomer can be dried in vacuum at 4.7 kPa (35 mm Hg) requiring a drying time of 2-4 hours for achieving a volatiles content of less than 0.5%.

It may be concluded that with respect to all relevant properties of rubber obtained by mechanical coagulation and vacuum drying (TEST) shows no significant differences when compared with rubber obtained by the conventional industrial process (REF), comprising salt/acid coagulation.

In table I the following abbreviations are used:

| | |
|---|---|
| % m/m | : per cent by weight |
| TEM | : Total Extractable Material |
| MV | : Mooney viscosity |
| Mod. | : Modulus |
| ML | : Minimum torque value |
| MH | : Maximum torque value |
| $TS_1$ | : Scorch time one |
| TC 50 | : Curing time necessary to reach 50% of curing |

TC 90     : Curing time necessary to reach 90% of curing

TABLE I

CHEMICAL AND PHYSICAL PROPERTIES OF RUBBERS PRODUCED

|  | SPEC (Typical S-1712) | REF | TEST |
|---|---|---|---|
| Vol. matter(% m/m) | 0.1-0.3 | 0.1 | 0.1 |
| ash(% m/m) | 0.6-1.0 | 0.03 | 0.05 |
| org. acid(% m/m) | 5.0 | 4.6 | 5.2 |
| soap (% m/m) | 0.02-0.09 | <0.01 | <0.01 |
| bound styrene(% m/m) | 23.1-23.6 | 23.1 | 23.4 |
| stabilizer(% m/m) | 0.2-0.4 | 0.28 | 0.30 |
| TEM (% m/m) | 32-33 | 32.0 | 31.9 |
| oil(% m/m) | 27-28 | 27.5 | 27.0 |
| MV | 45-60 | 57.4 | 56.7 |
| Delta Mooney | -10 | -6 | -7 |
| Tensile-strength( MPa) | 22-24 | 23.3 | 24.0 |
| Elongation(%) | 580-630 | 610 | 620 |
| Mod. 25 min(MPa) | 6.5-7.5 | 6.4 | 7.5 |
| Mod. 35 min(MPa) | 8.7-10 | 9.7 | 9.7 |
| Mod. 50 min(MPa) | 9.8-11.2 | 10.6 | 10.7 |
| ML(Nm) | 0.81-0.94 | 0.92 · | 0.92 |
| MH(Nm) | 3.4-3.6 | 3.51 | 3.58 |
| $TS_1$(min) | 4.5-5.2 | 5.3 | 4.7 |
| TC 50(min) | 8.5-9.3 | 10.2 | 9.2 |
| TC 90(min) | 13.2-14.5 | 14.9 | 14.2 |

An industrially manufactured latex (SBR-1712 latex) was processed by mechanical coagulation without preceding stripping and dried in a pilot plant scale vacuum dryer with an average residence time of 4 minutes, providing an outlet product, the characteristics of which appeared to have not been altered significantly.

The relevant data are summarized in the following table.

## TABLE

| | |
|---|---|
| Styrene content of the inlet product | 0.6 % |
| Styrene content of the outlet product | 0.047% |
| | |
| Moisture content of the inlet product | 7.4 % |
| Moisture content of the outlet product | 0.12 % |
| | |
| Mooney viscosity of inlet product : | 48 |
| Mooney viscosity of outlet product: | 48 |

**Claims**

1. Process for the recovery of rubber crumbs prepared by emulsion polymerization of a conjugated diene and a vinyl substituted aromatic and optionally acrylonitrile, comprising a flashing step in order to remove the non converted conjugated diene, an optional step of blending with additives, a coagulation step carried out in closed equipment, closed mechanical dewatering step(s), which may optionally be integrated with the coagulation step, and a direct continuous or batchwise step of removal of water and the non converted vinyl substituted aromatic and/or acrylonitrile monomer by evaporation, and subsequent separation of said monomer(s) from water after condensation.

2. Process according to claim 1, characterized in that the coagulation step is a mechanical coagulation using a staged apparatus, having self cleaning means such as a twin screw extruder coagulator, by addition of water, low pressure steam and a strong acid in an amount to provide a sufficient low pH in order to obtain a substantial complete coagulation, to said extruder at a temperature in the range of from 50-100 °C.

3. Process according to claims 1 and 2, characterized in that the mechanical coagulation step is carried out at a pH value below 3.

4. Process according to any one of the claims 1-3, characterized in that the coagulation step is carried out at a temperature in the range of from 60 to 80 °C.

5. Process according to any one of the claims 1-4, characterized in that the coagulation step is carried out in a closed twin screw extruder.

6. Process according to any one of the claims 1-5, characterized in that the twin screw extruder is used in combination with a disintegrator.

7. Process according to any one of the claims 1-6, characterized in that as dewatering equipment for the initial separation of the coagulate from the major part of the aqueous solution, a closed mechanical filter and/or mechanical predrier is used.

8. Process according to any one of the claims 1-7, characterized in that rubber crumbs are prepared during the coagulation and dewatering steps, which have a water content in the range of from 1 to 15% by weight.

9. Process according to any one of the claims 1-8, characterized in that the coagulation step is starting from a latex having a dry matter content of from 15 to 30% by weight, a styrene content of 0.5 to 35% by weight and preferably of from 5 to 35% by weight.

10. Process according to any one of the claims 1-8, characterized in that the coagulation step is starting from a latex having a pH value in the range of from 9.0 to 11.0.

11. Process according to any one of the claims 1-8, characterized in that the coagulation step is using sulphuric acid (98%) in an amount of from 2.5 to 5 kg/m$^3$ latex and water in an amount of from 0.1 to 0.5 m$^3$/m$^3$ latex low pressure steam in an amount sufficient to maintain a temperature of about 60 °C, and electrical energy of from 1 to 10 kWh/m$^3$ latex.

12. Process according to any one of the claims 1-10, characterized in that the process step for separation of the remaining amount of water and the non converted monomer is carried out in a combined evaporating/drying equipment of a staged, indirectly heated, mechanically agitated, self cleaning type.

13. Process according to any one of the claims 1-11, characterized in that the evaporation/drying step is carried out at vacuum and at a temperature of at most 100 °C.

14. Process according to any one of the claims 1-13, characterized in that the evaporation/drying step is continued until rubber with residual volatiles contents below 0.5% by weight is obtained.

15. Process according to any one of the claims 1-14, characterized in that a rubber latex, obtained by emulsion polymerization of 1,3-butadiene and styrene, is processed.

## Patentansprüche

1. Verfahren zur Rückgewinnung von Kautschukkrümeln, hergestellt durch Emulsionspolymerisation eines konjugierten Diens und eines vinylsubstituierten Aromaten und gegebenenfalls Acrylnitril, umfassend eine Verdampfungsstufe zum Entfernen des nicht umgewandelten Diens, eine wahlweise Stufe zum Vermischen mit Zusatzstoffen, eine in einer geschlossenen Apparatur durchgeführte Koagulationsstufe, abgeschlossene mechanische Entwässerungsstufe(n), die gegebenenfalls mit der Koagulationsstufe integriert sein kann (können), und einer unmittelbaren kontinuierlichen oder absatzweisen Stufe zum Entfernen von Wasser und der nicht umgewandelten vinylsubstituierten aromatischen und/oder Acrylnitrilmonomeren durch Verdampfen und anschließendes Abtrennen dieses (oder dieser) Monomeren vom Wasser nach Kondensieren.

2. Verfahren nach Anspruch 1,
   dadurch gekennzeichnet,
   daß die Koagulationsstufe eine mechanische Koagulation ist unter Verwendung einer stufenweisen Apparatur mit selbstreinigenden Mitteln, wie einem Doppelschneckenextruder, durch Zugabe von Wasser, Niederdruckdampf und einer starken Säure in einer Menge zur Erzeugung eines ausreichenden niedrigen pH-Wertes, um eine im wesentlichen vollständige Koagulation zu erhalten, zu dem Extruder bei einer Temperatur im Bereich von 50-100°C.

3. Verfahren nach den Ansprüchen 1 und 2,
   dadurch gekennzeichnet,
   daß die mechanische Koagulationsstufe bei einem pH-Wert unter 3 durchgeführt wird.

4. Verfahren nach irgendeinem der Ansprüche 1 bis 3,
   dadurch gekennzeichnet,
   daß die Koagulatiosstufe bei einer Temperatur im Bereich von 60 bis 80°C durchgeführt wird.

5. Verfahren nach irgendeinem der Ansprüche 1 bis 4,
   dadurch gekennzeichnet,
   daß die Koagulationsstufe in einem geschlossenen Doppelschneckenextruder durchgeführt wird.

6. Verfahren nach irgendeinem der Ansprüche 1 bis 5,
   dadurch gekennzeichnet,
   daß der Doppelschneckenextruder in Kombination mit einem Zerkleinerer verwendet wird.

7. Verfahren nach irgendeinem der Ansprüche 1 bis 6,
   dadurch gekennzeichnet,
   daß als Entwässerungsapparatur für die anfängliche Abtrennung des Koagulats vom Hauptteil der wässrigen Lösung ein geschlossener mechanischer Filter und/oder ein mechanischer Vortrockner verwendet wird.

8. Verfahren nach irgendeinem der Ansprüche 1 bis 7,
     dadurch gekennzeichnet,
     daß die Kautschukkrümel, die während der Koagulations- und der Entwässerungsstufen hergestellt werden, einen Wassergehalt im Bereich von 1 bis 15 Gewichtsprozent haben.

9. Verfahren nach irgendeinem der Ansprüche 1 bis 8,
     dadurch gekennzeichnet,
     daß die Koagulationsstufe von einem Latex mit einem Trockengehalt von 15 bis 30 Gewichtsprozent, einem Styrolgehalt von 0,5 bis 35 Gewichtsprozent, vorzugsweise von 5 bis 35 Gewichtsprozent, aus gestartet wird.

10. Verfahren nach irgendeinem der Ansprüche 1 bis 8,
     dadurch gekennzeichnet,
     daß die Koagulationsstufe von einem Latex mit einem pH-Wert im Bereich von 9,0 bis 11,0 aus gestartet wird.

11. Verfahren nach irgendeinem der Ansprüche 1 bis 8,
     dadurch gekennzeichnet,
     daß die Koagulationsstufe Schwefelsäure (98%ig) in einer Menge von 2,5 bis 5 kg je m³ Latex, Wasser in einer Menge von 0,1 bis 0,5 m³ je m³ Latex, Niederdruckdampf in einer Menge, die ausreicht, die Temperatur auf ungefähr 60°C zu halten, und elektrische Energie von 1 bis 10 kWh je m³ Latex verwendet.

12. Verfahren nach irgendeinem der Ansprüche 1 bis 10,
     dadurch gekennzeichnet,
     daß die Verfahrensstufe zum Abtrennen der restlichen Menge Wasser und des nicht ungewandelten Monomers in einer kombinierten Verdampfungs-/Trocknungsapparatur eines stufenweise, indirekt beheizten, mechanisch gerührten, selbstreinigenden Typs durchgeführt wird.

13. Verfahren nach irgendeinem der Ansprüche 1 bis 11,
     dadurch gekennzeichnet,
     daß die Verdampfungs-/Trocknungsstufe unter vermindertem Druck und bei einer Temperatur von höchstens 100°C durchgeführt wird.

14. Verfahren nach irgendeinem der Ansprüche 1 bis 13,
     dadurch gekennzeichnet,
     daß die Verdampfungs-/Trockenstufe forgesetzt wird, bis Kautschuk mit Restgehalten von flüchtigen Verbindungen unter 0,5 Gewichtsprozent erhalten wird.

15. Verfahren nach irgendeinem der Ansprüche 1 bis 14,
     dadurch gekennzeichnet,
     daß ein Kautschuklatex, der durch Emulsionspolymerisation von 1,3-Butadien und Styrol erhalten worden ist, verarbeitet wird.

**Revendications**

1. Procédé pour la récupération de balles de particules d'élastomère, préparées par polymérisation en émulsion d'un diène conjugué et d'un composé aromatique à substitution vinyligue et, facultativement, d'acrylonitrile, comportant une étape de détente éclair afin d'éliminer le diène conjugué non converti, une étape facultative de mélange avec des additifs, l'étape de coagulation mise en oeuvre dans une installation étanche, une(des) étape(s) d'essorage mécanique en circuit fermé, qui peuvent, facultativement être intégrés à l'étape de coagulation, et une étape directe en continu ou en discontinu d'élimination de l'eau et/ou du monomère aromatique à substitution vinyligue et/ou acrylonitrile, n'ayant pas réagi, par évaporation, et séparation subséquente dudit(desdits) monomère(s) de l'eau après une condensation.

2. Procédé selon la revendication 1, caractérisé en ce que l'étape de coagulation est une coagulation mécanique mettant en oeuvre un appareil à étage, possédant des moyens auto-nettoyants, tels qu'un coagulateur à boudineuse à double vis, par addition d'eau, de vapeur à basse pression et d'un acide fort en une quantité pouvant fournir un pH suffisamment faible afin d'obtenir une coagulation pratiquement complète, à ladite boudineuse à une température dans la gamme de 50 à 100°C.

3. Procédé selon les revendications 1 et 2, caractérisé en ce que l'étape de coagulation mécanique est mise en oeuvre à une teneur de pH inférieure à 3.

4. Procédé selon l'une quelconque des revendications 1 à 3, caractérisé en ce que l'étape de coagulation est mise en oeuvre à une température dans la gamme de 60 à 80°C.

5. Procédé selon l'une quelconque des revendications 1 à 4, caractérisé en ce que l'étape de coagulation est mise en oeuvre dans une extrudeuse étanche à double vis.

6. Procédé selon l'une quelconque des revendications 1 à 5 caractérisé en ce que l'extrudeuse à double vis est utilisée en combinaison avec un désintégrateur.

7. Procédé selon l'une quelconque des revendications 1 à 6, caractérisé en ce que comme appareillage d'essorage pour la séparation initiale du coagulat de la majeure partie de la solution aqueuse, on utilise un filtre métallique et/ou un pré-sécheur mécanique, sous condition étanche.

8. Procédé selon l'une quelconque des revendications 1 à 7, caractérisé en ce que les balles de particules d'élastomère sont préparées pendant les étapes de coagulation et d'essorage, ces balles présentant une teneur en eau dans la gamme de 1 à 15% en poids.

9. Procédé selon l'une quelconque des revendications 1 à 8, caractérisé en ce que l'étape de coagulation débute à partir d'un latex présentant une teneur en produit sec de 15 à 30% en poids, une teneur en styrène de 0,5 à 35% en poids et de préférence de 5 à 35% en poids.

10. Procédé selon l'une quelconque des revendications 1 à 8, caractérisé en ce que l'étape de coagulation débute à partir d'un latex présentant une valeur de péage dans la gamme de 9,0 à 11,0.

11. Procédé selon l'une quelconque des revendications 1 à 8, caractérisé en ce que l'étape de coagulation utilise de l'acide sulfurique (98%) en une quantité de 2,5 à 5 kg/m$^3$ de latex, et, de l'eau en une quantité de 0,1 à 0,5 m$^3$/m$^3$ de latex, de la vapeur à basse pression en une quantité suffisante pour maintenir une température d'environ 60°C, et une énergie électrique de 1 à 10 kWh/m$^3$ de latex.

12. Procédé selon l'une quelconque des revendications 1 à 10, caractérisé en ce que l'étape de traitement pour la séparation de la quantité restante d'eau et du monomère non converti est mise en oeuvre dans un appareillage d'évaporation/séchage d'un type étagé, auto-nettoyant, à chauffage indirect et agitation mécanique.

13. Procédé selon l'une quelconque des revendications 1 à 11, caractérisé en ce que l'étape d'évaporation/séchage est mise en oeuvre sous vide et à une température d'au moins 100°C.

14. Procédé selon l'une quelconque des revendications 1 à 13, caractérisé en ce que l'étape d'évaporation/séchage est poursuivi jusqu'à ce que l'on obtienne un élastomère présentant des teneurs en produits volatils résiduels, inférieures à 0,5% en poids.

15. Procédé selon l'une quelconque des revendications 1 à 14, caractérisé en ce que l'on traite un latex d'élastomère obtenu par polymérisation en émulsion du 1,3-butadiène et du styrène.

FIG.1

EP 0 353 802 B1